# EUROPEAN PATENT APPLICATION

(11) **EP 2 631 530 A1**
(43) Date of publication of application: **28.08.2013**
(21) Application number: 11819147.7
(22) Date of filing: 29.08.2011
(51) Int. Cl.: F21S 2/00, F21V 7/22, F21V 9/08, H01L 31/04

(54) **SIMULATED SUNLIGHT LIGHT IRRADIATION DEVICE AND INSPECTION DEVICE FOR SOLAR CELL PANEL**

(30) Priority: 08.10.2010 JP 2010229124
(71) Applicant: Sharp Kabushiki Kaisha, Osaka-shi, Osaka 545-8522 (JP)
(72) Inventor: TADANO, Hiroyuki, Osaka-shi Osaka 545-8522 (JP)
(74) Representative: Müller - Hoffmann & Partner
(86) International application number: PCT/JP2011/004802
(87) International publication number: WO 2012/046377

(57) **Abstract**

Light irradiates readily and reliably with uniform illuminance over an entire irradiation area even if an area of an irradiation subject is large and even after lamp replacement. For each optical system, a lamp light source and an optical filter, which are capable of controlling the light amount, are provided. The irradiation area of the irradiation subject is assumed to be divided into a plurality of areas to be constituted as a plurality of small irradiation areas. Further, the light guiding members of the optical systems correspond to respective ones of the plurality of small irradiation areas, and the plurality of optical systems emit light onto the entire irradiation areas.

## Description

### TECHNICAL FIELD

The present invention relates to a pseudo-sunlight irradiation apparatus for emitting pseudo-sunlight with high directivity onto an irradiation subject, and solar panel inspection apparatus for measuring an output characteristic of a solar panel to determine quality, using the pseudo-sunlight irradiation apparatus.

### BACKGROUND ART

In a conventional pseudo-sunlight irradiation apparatus functioning as a light source apparatus for reproducing the spectral distribution of sunlight with high precision, an attempt has been conventionally made to unify the illuminance distribution on a measurement subject by lighting a xenon lamp to let pseudo-sunlight passing through an optical filter (air mass filter) undergo diffuse reflection with a reflection plate to obtain light having a desired spectrum.

In Patent Literature 1, a case is disclosed where two light sources, which are a xenon light source and a halogen light source, are disposed while being partitioned off from each other within a box-shaped frame below an irradiation surface, and illuminance is made uniform using a reflection plate inside each partitioned box-shaped frame.

In Patent Literature 2, a case is disclosed where an entire region of a light reception surface of a solar panel is assumed to be divided into a plurality of light reception sections and a selected light amount adjusting member is placed for each light reception surface of the respective assumedly divided sections.

### [Citation List]

### [Patent Literature]

Patent Literature 1: Japanese Patent No. 3500352
Patent Literature 2: Japanese Laid-Open Publication No. 2006-216619

### SUMMARY OF INVENTION

### [Technical Problem]

In the conventional configuration disclosed in Patent Literature 1, a solar battery evaluation apparatus for measuring output of a solar panel by irradiating pseudo-sunlight requires that illuminance equivalent to standard sunlight be irradiated onto the solar panel, and that illuminance be uniform (error is less than or equal to 2 percent in either direction) on the effective area of the solar panel subject to be measured. In the conventional technique, unification of illuminance has been performed by adjusting the incline of a light source or a reflection plate in the vicinity thereof, or by placing a light amount adjusting member on the entire region of a light reception section of the solar panel. However, since it is difficult to adjust microscopic amount of illuminance by adjusting the reflection plate, and is necessary to independently adjust the incline of each of a plurality of reflection plates provided for the making the amount of irradiation light uniform. Thus, making the amount of light irradiation uniform is time-intensive and difficult.

Additionally, in the conventional configuration disclosed in Patent Literature 2, light is allowed to enter a divided light reception surface from a plurality of locations, even for the same type of light. Thus, making the amount of light irradiation uniform is a highly time-intensive process. Also, when a lamp is replaced, it has been necessary to start over with any adjustments for making the amount of light irradiation uniform in order to eliminate any illuminance irregularities due to individual differences in lamps or margin of error of positioning thereof.

The present invention is intended to solve the conventional problems described above. An objective of the present invention is to provide: a pseudo-sunlight irradiation apparatus capable of readily and reliably emitting irradiation light with uniform illuminance over an entire irradiation area even if an area of an irradiation subject is large or even after lamp replacement; and a solar panel inspection apparatus for measuring an output characteristic of a solar panel to determine quality using the pseudo-sunlight irradiation apparatus.

### [Solution to Problem]

A pseudo-sunlight irradiation apparatus according to the present invention comprises a plurality of optical systems provided therein, each optical system comprising: at least two light sources with different ranges of emitted wavelengths; optical elements for providing different spectral distributions for respective rays of output light from the two light sources; and light guiding bodies for propagating the output light obtained through the optical elements and emitting the light as area irradiation onto an external irradiation subject, where: an irradiation area of the irradiation subject is assumed to be divided into a plurality of small irradiation areas; light guiding members of each of the optical systems correspond to respective ones of the plurality of small irradiation areas; and the plurality of optical systems emit the light onto the entire irradiation area, thereby achieving the objective described above.

Preferably, in a pseudo-sunlight irradiation apparatus according to the present invention, each of the optical systems comprises: a first light irradiation apparatus having a first light source, and a first optical filter as the optical element for adjusting a spectrum of light emitted from the first light source; a second light irradiation apparatus having a second light source, and a second optical filter as the optical element for adjusting a spectrum of light emitted from the second light source; and a third light irradiation apparatus having a light mixing member for mixing the light from the first light irradiation apparatus and the light from the second light irradiation apparatus to obtain pseudo-sunlight similar to sunlight, and a third light guiding member for taking the pseudo-sunlight from the light mixing member into the third light guiding member from one end surface and propagating the light through the inside thereof to emit light with high directivity as area irradiation onto an irradiation subject uniformly from a planar surface of the third light guiding member.

Still preferably, in a pseudo-sunlight irradiation apparatus according to the present invention, each of the optical systems comprises: a first light irradiation apparatus having a first light source, a first light guiding member for taking output light from the first light source into one end surface of the first light guiding member and emitting light with increased directivity from another end surface thereof, and a first optical filter for adjusting a spectrum of the light output from the other end surface of the first light guiding member; a second light irradiation apparatus having a second light source, a second light guiding member for taking output light from the second light source into one end surface of the second light guiding member and emitting light with increased directivity from another end surface thereof, and a second optical filter for adjusting a spectrum of the light output from the other end surface of the second light guiding member; and a third light irradiation apparatus having a light mixing member for mixing the light from the first light irradiation apparatus and the light from the second light irradiation apparatus to obtain pseudo-sunlight similar to sunlight, and a third light guiding member for taking the pseudo-sunlight from the light mixing member into the third light guiding member from one end surface and propagating the light through the inside thereof to emit light with high directivity as area irradiation onto an irradiation subject uniformly from a planar surface of the third light guiding member.

Still preferably, in a pseudo-sunlight irradiation apparatus according to the present invention, the optical system having the first light irradiation apparatus, the second light irradiation apparatus and the third light irradiation apparatus is defined as a unit, , and a plurality of groups of two units, where the units of each of said groups are placed on the left and right facing each other and where the other end surfaces of the third light guiding members of the third light irradiation apparatuses touch each other, are placed in an array in a forward and backward direction in accordance with the size of the irradiation subject.

Still preferably, in a pseudo-sunlight irradiation apparatus according to the present invention, instead of the third light irradiation apparatus, a fourth light guiding member is provided in between a left side set in which the first light irradiation apparatus, the second light irradiation apparatus and the light mixing section are placed, and a right side set in which the first light irradiation apparatus, the second light irradiation apparatus and the light mixing section are placed, the fourth light guiding member being for taking mixed light from the light mixing section on the left side into one end surface of the fourth light guiding member and propagating the light through the inside thereof, as well as for taking mixed light from the light mixing section on the right side into another end surface of the fourth light guiding member and propagating the light through the inside thereof, to emit light with high directivity as area irradiation onto an irradiation subject uniformly from a planar surface of the fourth light guiding member, and where the left side set, the right side set and the fourth light guiding member are defined as a unit, and a plurality of the units are placed in an array in a forward and backward direction in accordance with the size of an irradiation subject.

A solar panel inspection apparatus according to the present invention is provided for measuring an output characteristic of a solar panel to determine quality, using the pseudo-sunlight irradiation apparatus according to the present invention.

With the structure described above, the function of the present invention will be described hereinafter.

In the pseudo-sunlight irradiation apparatus according to the present invention, a plurality of optical systems are provided. Each optical system comprises: at least two light sources with different ranges of emitted wavelengths; optical elements for providing different spectral distributions for respective rays of output light from the two light sources; and light guiding bodies for propagating the output light obtained through the optical elements and emitting the light as area irradiation onto an external irradiation subject. An irradiation area of the irradiation subject is assumed to be divided into a plurality of small irradiation areas. Light guiding members of the optical systems correspond to respective ones of the plurality of small irradiation areas, and a plurality of optical systems emit the light onto the entire irradiation area.

Accordingly, for each optical system, a lamp light source and an optical filter, which are capable of controlling the light amount, are provided. The irradiation area of the irradiation subject is assumed to be divided into a plurality of areas to be constituted as a plurality of small irradiation areas. Further, the light guiding members of the optical systems correspond to respective ones of each of the plurality of small irradiation areas, and the plurality of optical systems emit light onto the entire irradiation area. Thus, irradiation light with uniform illuminance can be readily and reliably emitted over an entire irradiation area even if an area of an irradiation subject is large and even after lamp replacement. In summary, while it may be difficult to make irradiation intensity of a large irradiation area uniform with high accuracy, if such a large irradiation area is assumed to be divided into a plurality of areas and if the irradiation intensity of each small irradiation area for each optical system is made uniform with high accuracy by adjusting the optical system, then the combination of them enables to make irradiation intensity (light amount) of a large irradiation area to be made uniform with high accuracy.

### [Advantageous Effects of Invention]

According to the present invention with the structure described above, the irradiation area of the irradiation subject is assumed to be divided into a plurality of areas to be constituted as a plurality of small irradiation areas, the light guiding members of the optical system correspond to respective ones of the plurality of small irradiation areas, and the plurality of optical systems emit light onto the entire irradiation area. Thus, by adjusting irradiation intensity of such a small irradiation area for each optical system, even if an area of an irradiation subject is large or even after lamp replacement, irradiation light with uniform illuminance can be readily and reliably emitted over such an entire irradiation area.

### BRIEF DESCRIPTION OF THE DRAWINGS

Figure **1** is a perspective view schematically illustrating a structural example of an important part of a pseudo-sunlight irradiation apparatus according to Embodiment 1 of the present invention.
Figure **2** is a longitudinal cross sectional view schematically illustrating a structural example of an important part of a pseudo-sunlight irradiation apparatus in Figure **1****.**
Figure **3** is a perspective view illustrating a xenon light source, a reflector housing the xenon light source, and an aperture plate in the front in Figure **1****.**
Figure **4(a)** is a longitudinal cross sectional view of a xenon light source, a reflector, an aperture plate, and a tapered light guiding member in Figure **1****.** Figure **4(b)** is a plane view illustrating an aperture section of an aperture plate in Figure **3****.**
Figure **5** is a cross sectional view schematically illustrating a first structure of a tapered light guiding member for preventing stray light from entering an adjacent tapered light guiding member.
Figure **6** is a perspective view schematically illustrating an external appearance of a first structure of a tapered light guiding member in Figure **5****.**
Figure **7** is a plane view of a pseudo-sunlight irradiation apparatus in Figure **1****.**
Figure **8(a)** is a chart illustrating illuminance with respect to wavelength of a xenon lamp. Figure **8(b)** is a chart illustrating illuminance with respect to wavelength of a halogen lamp.
Figure **9(a)** and **9(b)** are each a perspective view for further describing the adjustment of the amount of light of a pseudo-sunlight irradiation apparatus according to Embodiment 1.
Figure **10** is a perspective view schematically illustrating a structural example of an important part of a pseudo-sunlight irradiation apparatus according to Embodiment 2 of the present invention.
Figure **11** is a longitudinal cross sectional view schematically illustrating a structural example of an important part of a pseudo-sunlight irradiation apparatus in Figure **10****.**
Figure **12** is a plane view of a pseudo-sunlight irradiation apparatus in Figure **10****.**
Figures **13(a)** and **13 (b)** are each a perspective view for further describing the adjustment of the amount of light of a pseudo-sunlight irradiation apparatus according to Embodiment 2.
Figure **14** is a longitudinal cross sectional view schematically illustrating a variation of a structural example of an important part of a pseudo-sunlight irradiation apparatus in Figure **1****.**

### [Reference Signs List]

- **1, 1A**: pseudo-sunlight irradiation apparatus
- **2**: xenon light source
- **3a**: reflector
- **3b**: aperture plate
- **31**: aperture section
- **32**: light shielding member
- **4**: tapered light guiding member
- **41, 91**: light shielding member
- **42, 92**: light shielding member
- **5**: air mass filter (first optical filter; spectral adjusting filter)
- **6**: first light irradiation apparatus
- **7, 7A, 2C, 2D**: halogen light source
- **8, 8A, 3C, 3D**: reflector
- **9, 9C, 9D**: tapered light guiding member
- **93**: light shielding member (light shielding plate)
- **10, 10C, 10D**: air mass filter (second optical filter; spectral adjusting filter)
- **11**: second light irradiation apparatus
- **12**: light mixing section (wavelength selecting mirror)
- **13**: irradiation subject (solar panel)
- **14, 14A**: light guiding member
- **15**: third light irradiation apparatus
- **15A**: fourth light irradiation apparatus
- **L1, L2**: stray light

### BEST MODE FOR CARRYING OUT THE INVENTION

The present invention according to Embodiments 1 and 2 will be described in detail as follows, with reference to the drawings: a pseudo-sunlight irradiation apparatus; and a case where the pseudo-sunlight irradiation apparatus is applied to a solar panel inspection apparatus. With respect to the prepared figures, thicknesses, lengths or the like of each element in each figure are not limited to the configuration shown in the figure.

### (Embodiment 1)

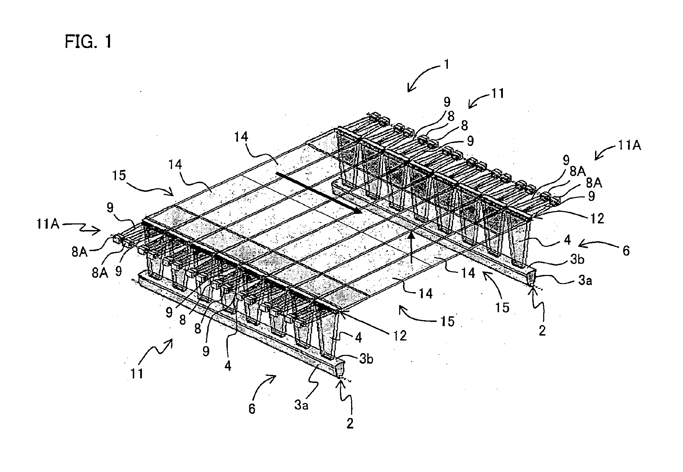

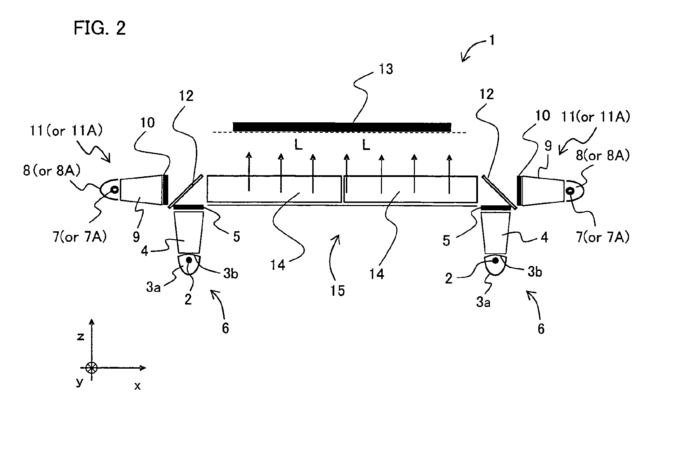

Figure 1 is a perspective view schematically illustrating a structural example of an important part of a pseudo-sunlight irradiation apparatus according to Embodiment 1 of the present invention. Figure **2** is a longitudinal cross sectional view schematically illustrating a structural example of an important part of the pseudo-sunlight irradiation apparatus in Figure **1****.**

In Figures **1** and **2****,** a pseudo-sunlight irradiation apparatus **1** according to Embodiment 1 is equipped with a first light irradiation apparatus **6.** The first light irradiation apparatus **6** comprises: a xenon light source **2** of a xenon lamp; a reflector **3a** for housing the xenon light source **2** therein, with an inner surface functioning as a reflection surface; an aperture plate **3b** for covering a front portion of the reflector **3a;** a tapered light guiding member **4** functioning as a tapered coupler for taking in a xenon output light from a bottom end surface thereof and propagating the light through the inside to improve the directivity of the light, where the xenon output light comes from an aperture section (not shown) of the aperture plate **3b;** and an air mass filter **5** functioning as a first optical filter (spectral adjusting filter) for filtering the xenon light from the tapered light guiding member **4** to form a spectrum of pseudo-sunlight closer to the shorter wavelength side of the spectrum. As such, in the first light irradiation apparatus **6,** an output light from the xenon light source **2** is reflected and gathered by the reflector **3a.** The xenon output light is then output from the aperture section of the aperture plate **3b,** and the xenon output light is taken into the bottom end surface of the tapered light guiding member **4,** referred to as a tapered coupler. The xenon output light is propagated through the inside to form parallel light with high directivity, and the xenon light with high directivity is output from the top end surface of the tapered light guiding member **4** through the air mass filter **5.** The xenon light from the air mass filter 5 corresponds to a spectrum of pseudo-sunlight closer to the shorter wavelength side of the spectrum.

The pseudo-sunlight irradiation apparatus **1** is also equipped with a second light irradiation apparatus **11.** The second light irradiation apparatus **11** comprises: a halogen light source **7** such as a halogen lamp; a reflector **8** for housing the halogen light source **7,** with an inner surface functioning as a reflection surface; a tapered light guiding member **9** for taking in halogen output light reflected by the inner surface of the reflector **8,** into the bottom end surface of the tapered light guiding member **9** and propagating the light through the inside to improve the directivity of the light; and an air mass filter **10** functioning as a second optical filter (spectral adjusting filter) for filtering the halogen output light from an end surface of the tapered light guiding member **9** to form a spectrum of pseudo-sunlight closer to the longer wavelength side of the spectrum. As such, in the second light irradiation apparatus **11,** the output light of the halogen light source **7** is reflected and gathered by the reflector **8.** The halogen output light is taken into one end surface of the tapered light guiding member **9** referred to as a tapered coupler, and the light is propagated through the inside to form parallel light with high directivity. Then the halogen output light with high directivity is output from the other end surface of the tapered light guiding member **9** through the air mass filter **10** for adjusting a spectrum. The halogen light from the air mass filter **10** corresponds to a spectrum of pseudo-sunlight closer to the longer wavelength side of the spectrum. The halogen light source **7** may be a one-filament type halogen lamp; however, a two-filament type halogen lamp is used for the halogen light source **7** herein to gain more power, and the tapered light guiding member **9** is used in conjunction with two halogen lamps.

The pseudo-sunlight irradiation apparatus **1** is further equipped with a third light irradiation apparatus **15.** The third light irradiation apparatus **15** comprises: a light mixing section **12,** such as a wavelength selecting mirror (or a wavelength mixing mirror), functioning as reflection and transmission means for reflecting xenon output light of shorter wavelength from the air mass filter **5** to adjust a spectrum of the first light irradiation apparatus **6,** and transmitting halogen output light of longer wavelength from the air mass filter **10** to adjust a spectrum of the second light irradiation apparatus **11,** to mix the light and obtain pseudo-sunlight which is similar to sunlight; and a light guiding member **14** for taking in pseudo-sunlight, which is diffused light from the light mixing section **12,** from one end surface and propagating the light through the inside to emit light **L** with high directivity uniformly as area irradiation onto an irradiation subject **13** such as a solar panel. Further, as illustrated in Figure **2****,** the third light irradiation apparatus **15** is placed on either side, and the respective light guiding members **14** touch each other at respective end surfaces thereof.

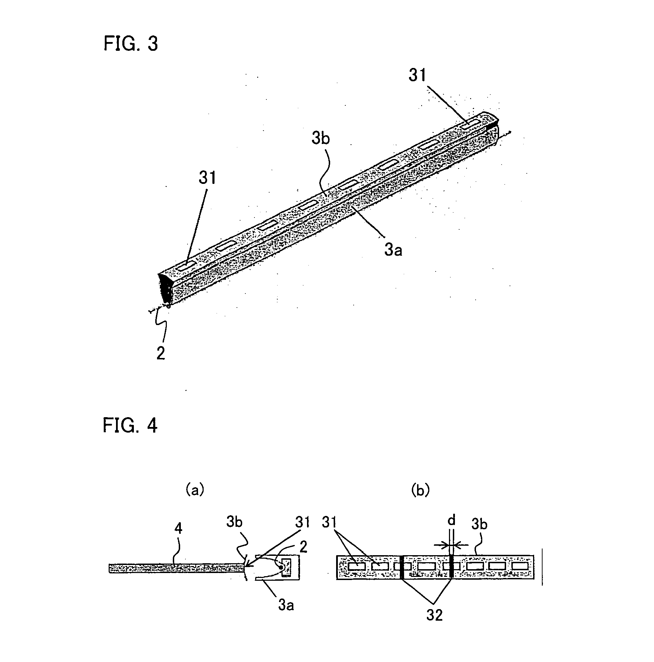

Figure **3** is a perspective view illustrating a xenon light source **2,** a reflector **3a** for housing the xenon light source **2,** and an aperture plate **3b** in front of the reflector **3a** in Figure **1****.** Figure **4(a)** is a longitudinal cross sectional view of a xenon light source **2,** a reflector **3a,** an aperture plate **3b,** and a tapered light guiding member **4** in Figure **1****.** Figure **4(b)** is a plane view illustrating an aperture section of an aperture plate **3b** in Figure **3****.**

As illustrated in Figures **3, 4(a)** and **4(b),** the reflector **3a** for reflecting and gathering output light from the xenon light source **2,** and the aperture plate **3b** in front of the reflector **3a** are provided. Aperture sections **31** are formed at a predetermined interval in the aperture plate **3b.** The configuration is such that xenon light with favorable directivity is taken into the aperture section **31** and is allowed to enter the bottom end surface of the tapered coupler, which is the light guiding member **4.**

Here, the inventors found the following: when the spectral distribution of pseudo-sunlight was reproduced with high accuracy as pseudo-sunlight in order to perform a quality inspection of a solar panel, the disturbance of the spectral distribution of pseudo-sunlight irradiated onto the solar panel as the irradiation subject **13** was due to stray light with poor directivity escaping through an opening between the light source side and the end surface side of the tapered light guiding member and entering an adjacent tapered light guiding member through its side surface. In order to prevent stray light from entering an adjacent tapered light guiding member through its side surface, a light shielding member is placed in between, for example, an adjacent tapered light guiding member **4,** and an opening between the xenon light source **2** and the bottom end surface side of the tapered light guiding member **4.**

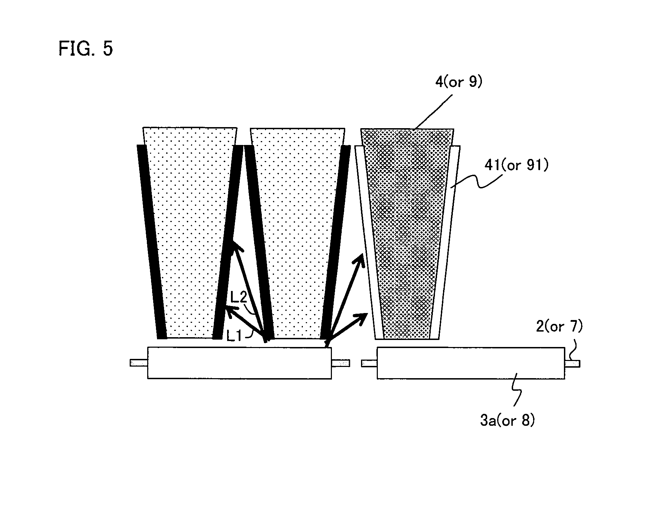

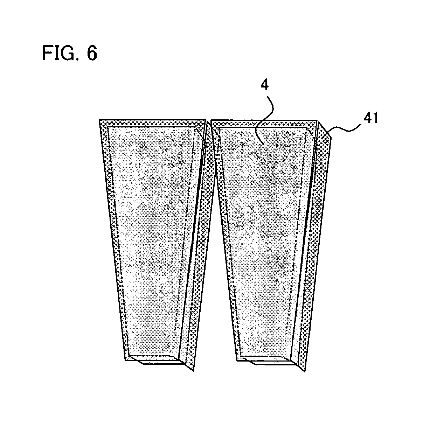

Figure **5** is a cross sectional view schematically illustrating a first structure of a tapered light guiding member for preventing stray light from entering an adjacent tapered light guiding member. Figure **6** is a perspective view schematically illustrating the first structure of the tapered light guiding member in Figure **5****.** While the lamp light source **2** of a xenon lamp and the reflector **3a** are provided in plural number and all together in Figure **1****,** they are configured for every adjacent two sets in Figure **5****.** The lamp light source **2** and reflector **3a** can take various structures in order to obtain a desired amount of output light. Further, the first structure and the second structure can be applied to the tapered light guiding member **9** for halogen light.

In the first light irradiation apparatus **6,** a circumferential side surface, other than an upper end surface and a lower end surface, of the tapered light guiding member **4,** which is a tapered coupler for increasing directivity of xenon output light, is covered with an independent light shielding member **41** as in Figures **5(a)** and **6****.** The periphery (side wall) of the tapered light guiding member **4** is surrounded by the light shielding member **41** as illustrated. Thus, even if stray lights **L1** and **L2** with poor directivity, escaping through the opening in between the bottom end surface of the tapered light guiding member **4** and the aperture section of the aperture plate **3b,** irradiates the light shielding member **41,** the light shielding member **41** prevents light from being taken into the inside the tapered light guiding member **4** entering through the side surface, reflecting off a wavelength selecting mirror of the light mixing section **12,** and entering a light guiding plate **14** side as stray light **L2,** as happens conventionally.

On the other hand, with regard to stray light on the side closer to the halogen light source **7,** a circumferential side surface of the tapered light guiding member **9,** which is a tapered coupler, other than one end surface and the other end surface thereof, for increasing directivity of halogen output light may be covered with an independent light shielding member **91** as in Figures **5** and **6****.** However, since halogen light is a heat ray, the temperature increases. Thus, it is better to cover the periphery as little as possible. In summary, on the side of the halogen light source **7,** it tends to be hot when the light shielding ratio is high. Thus, the light shielding ratio is set to be low on the side of the halogen light source **7.** The light shielding ratio of the light shielding member, placed in between adjacent tapered light guiding members **9** for increasing the directivity of the output light from the halogen light source **7,** is set to be lower than the light shielding ratio of the light shielding member placed in between adjacent tapered light guiding members **4** for increasing the directivity of the output light from the xenon light source **2.** As a result, the temperature increase of members due to absorption of halogen light reflected by the light shielding member can be prevented. For this reason, it is better for the reflection from the light shielding member to be as little as possible.

Next, unitization with a freely changeable irradiation area will be described.

As illustrated in Figure **1****,** the pseudo-sunlight irradiation apparatus **1** according to Embodiment 1 comprises a plurality of groups, each group of said plurality comprising a first light irradiation apparatus **6,** second light irradiation apparatus **11** and third light irradiation apparatus **15,** each group of said plurality being provided for either the left or right side. In Embodiment 1, eight sets (sixteen units) of them are provided in an array, leaving no space. The group of the first light irradiation apparatus **6,** second light irradiation apparatus **11** and third light irradiation apparatus **15** are unitized with one another, so that they can be manufactured accurately. Units of the first light irradiation apparatus **6,** second light irradiation apparatus **11** and third light irradiation apparatus **15** can be combined together to have the size of an irradiation area for pseudo-sunlight corresponding to a desired size of solar panel. Thus, the two groups on either side with each group constituted of the first light irradiation apparatus **6,** second light irradiation apparatus **11** and third light irradiation apparatus **15** are not limited to the eight sets (sixteen units) in the forward and backward direction. As a result, the unitization of a unit pseudo-sunlight irradiation apparatus capable of freely changing an irradiation area, as an optical system, is actualized. In this case, in the first light irradiation apparatus **6,** since the xenon light source **2,** reflector **3a,** and aperture plate **3b** are all in one irradiation course, they are used together. These xenon light source **2,** reflector **3a,** and aperture plate **3b** may also be provided for each tapered light guiding member **4.**

As described above, the unitization of the group of the first light irradiation apparatus **6,** second light irradiation apparatus **11** and third light irradiation apparatus **15** as a unit makes it possible to suppress variation in irradiation intensity on an irradiation area of a unit and accurately obtain a desired irradiation intensity (light amount). Even when a unitized unit of an irradiation area is combined with another to form a larger irradiation area, variation in irradiation intensity can be suppressed in such a large irradiation area as a whole to obtain desired uniform irradiation intensity (light amount). In summary, although it may be difficult to make the irradiation intensity of a large irradiation area uniform with accuracy, the irradiation intensity (light amount) of a large irradiation area can accurately be made uniform by dividing a large irradiation area into a plurality of areas, making the irradiation intensity of each of the small irradiation areas uniform with accuracy, and simply combining the areas together.

Thus, the group of the first light irradiation apparatus **6,** second light irradiation apparatus **11** and third light irradiation apparatus **15** is formed as a unit and the unit is manufactured such that irradiation intensity (light amount) of the unit is highly accurate. When the unit is assembled in accordance with the size of a solar panel, it will not be necessary to adjust the light amount for irradiation intensity (light amount), which has been conventionally performed and takes lot of time. Specifically, it has conventionally been necessary to measure which parts of a whole large irradiation area have low irradiation intensity, using an irradiation intensity inspection apparatus with reference irradiation detection cells provided at important points in accordance with the size of a solar panel, and to adjust the portions with low irradiation intensity in order to increase the irradiation intensity. With the present invention, such work will not be necessary. Further, such adjustment of irradiation intensity is not necessary during periodic maintenance. Accurate manufacturing of a unit of a unitized light irradiation apparatus without variation makes the adjustment of irradiation intensity to be unnecessary, and such a light irradiation apparatus is excellent for maintenance. In the past, it took a long time to adjust such irradiation intensity (to adjust a light amount) of a whole irradiation area.

Next, the adjustment of irradiation intensity (adjustment of a light amount) of a whole irradiation area will be further described.

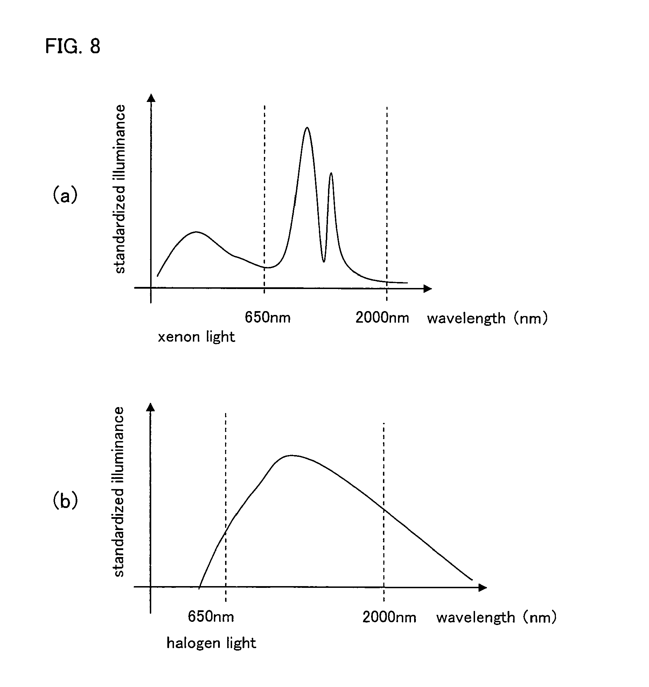

Figure **8** is a plane view of a pseudo-sunlight irradiation apparatus **1** in Figure **1****.**

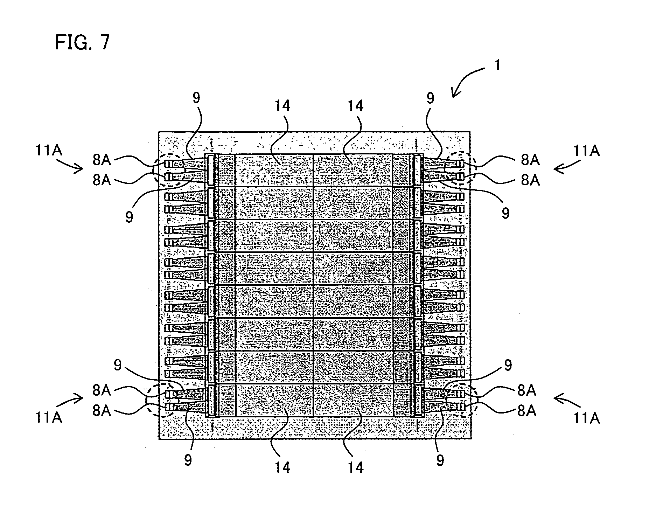

With the group of a first light irradiation apparatus **6,** a second light irradiation apparatus **11** and a third light irradiation apparatus **15** as a unit, two such groups are provided for the left and right sides respectively, and eight sets of the units are provided in the forward and backward direction. Since the amount of light output from reflectors on both ends (the closest one and the farthest one) in the forward and backward direction shows a tendency to be less, the amount of light output from reflectors on both ends is increased herein more than that at the other parts closer to the center portion, as illustrated in the plane view of Figure **7****,** so that the amount of irradiation light can be uniform. At both ends in the forward and backward direction, a halogen light source **7A** can be used, which is a little larger than the halogen light source **7.**

The pseudo-sunlight irradiation apparatus **1A** is equipped with a second light irradiation apparatus **11A.** The second light irradiation apparatus **11A** comprises: a halogen light source **7A** having a higher amount of light output than the halogen light source **7;** a reflector **8A for** housing the halogen light source **7A,** with an inner surface functioning as a reflection surface; a tapered light guiding member **9** for taking in halogen output light reflected by the inner surface of the reflector **8A,** through one end surface of the tapered light guiding member **9** and propagating the light through the inside to improve the directivity of the light; and an air mass filter **10** functioning as a second optical filter for filtering the halogen output light from the other end surface of the tapered light guiding member **9** to form a spectrum of pseudo-sunlight closer to the side of a longer wavelength. In this case, the reflector **8A,** the tapered light guiding member **9,** and the air mass filter **10** are to be compatible with the amount of light output of the halogen light source **7A.** If the reflector **8** is compatible with the amount of light output, the reflector **8** may be the same as reflector **8A.**

In addition, in the pseudo-sunlight irradiation apparatus **1** according to Embodiment 1, a group constituted of the first light irradiation apparatus **6,** the second light irradiation apparatus **11,** and the third light irradiation apparatus **15** are unitized, and two groups are disposed on the left and right sides, respectively. Then, eight such sets (two units disposed on the left and right sides, respectively, constitute a set; sixteen units in total) are provided in an array in the forward and backward direction. the unit can comprise at least a replaceable lamp with a different amount light output or a replaceable air mass filter **5** (spectral adjusting filter) with a different light transmittance, so that irradiation intensity (light amount) of light entering the light guiding plate **14** can be individually adjusted. By providing an attachment section for either the halogen light source **7** previously mentioned or the halogen light source **7A,** which has a higher amount of output light, light sources with different amounts of light output may be replaced.

Next, a solar panel inspection apparatus will be described, which is capable of precisely inspecting the quality of the amount of electricity generation obtained by emitting pseudo-sunlight uniformly as area irradiation onto a solar panel.

Figure **8(a)** is a chart illustrating illuminance with respect to wavelength of a xenon lamp. Figure **8(b)** is a chart illustrating illuminance with respect to wavelength of a halogen lamp.

Output light from a xenon lamp has fewer heat ray components contributing to the increase in the temperature than halogen light and has spectrum of sunlight closer to the shorter wavelength side of the spectrum, as illustrated in Figure **8(b)****.** Output light from a halogen lamp has many heat ray components contributing to the increase in the temperature, and has spectrum of sunlight closer to the longer wavelength side of the spectrum, as illustrated in Figure **8(b)****.** Pseudo-sunlight similar to sunlight can be obtained by allowing output lights of the xenon lamp and the halogen lamp to pass and to be mixed at the light mixing section **12.** The pseudo-sunlight can be guided into each light guiding member **14** and **14** from the light mixing section **12** such as a wavelength selecting mirror (or a wavelength mixing mirror), and pseudo-sunlight can be propagated to uniformly emit light with high directivity as area light onto the irradiation subject **13** (solar panel).

Thereby, quality inspection of the irradiation subject **13** (such as a solar panel) is performed by inspecting whether the solar panel as the irradiation subject **13** has an amount of electricity generation greater than or equal to a benchmark with a electricity generation amount inspection apparatus. A solar panel inspection apparatus is obtained from the pseudo-sunlight irradiation apparatus **1** and the electricity generation amount inspection apparatus.

According to Embodiment 1 described above, in the pseudo-sunlight irradiation apparatus **1** irradiating pseudo-sunlight, a light source, in which the short wavelength range such as the xenon light source **2** and an energy of light in the long wavelength range is great, is used, and light in a wavelength range corresponding to the long wavelength range of sunlight such as the halogen light source **7** is used. Thus, an inspection can be performed for measuring an output characteristic of a solar panel with precision. In addition, in a method of light shielding the tapered light guiding members **4** and **9** when a light source not using light of a longer wavelength is used, stray light **L2** can be prevented from entering an adjacent tapered light guiding member from the side surface thereof by providing a light shielding member in between adjacent tapered light guiding members. The stray light **L2** with poor directivity escaping from the aperture section **31** of the aperture plate **3b** for guiding in xenon light source **2** can be prevented from entering the tapered light guiding section **4** for xenon light source **2,** being guided inside the light guiding members **14** and **14,** and reducing the uniformity of irradiation of an irradiation surface.

Further, by shielding the light on the side closer to the halogen light source **7** with a light shielding member smaller than that on the side closer to the xenon light source **2,** the abnormal increase in the temperature can be prevented, and it also prevents any unfavorable influences of changing the spectrum characteristics of a coating member on an inner surface of a conventional reflection box or the like, due to high heat.

The adjustment of a light amount will be further described.

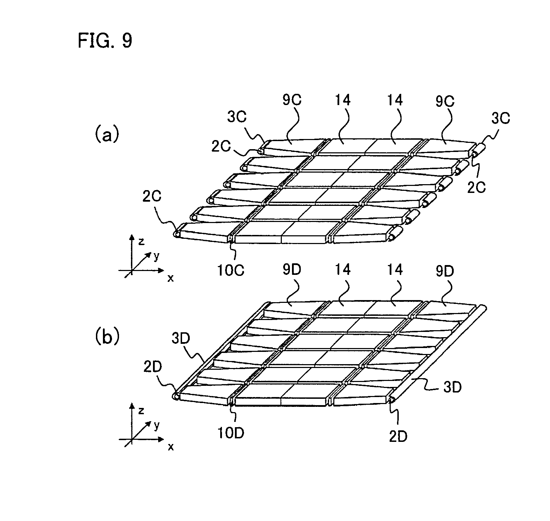

Figures **9(a)** and **9(b)** are each a perspective view for further describing the adjustment of the amount of light of the pseudo-sunlight irradiation apparatus **1** according to Embodiment 1. In Figures **9(a)** and **9(b)****,** the first light irradiation apparatus **6** and the light mixing section **12** (wavelength selecting mirror) in Figure **1** are not shown. The first light irradiation apparatus **6** and the light mixing section **12** (wavelength selecting mirror) are not necessary in the description using Figures **9(a)** and **9(b)** regarding only the adjustment of the amount of light. In summary, this description of the adjustment of a light amount may be applied to Figure **1****.**

As illustrated in Figure **9(a)****,** respective light guiding members **14** and light source lamps **2C** are paired one-to-one, and some lamps are exchanged or the electric current is adjusted, so that the amount of light output from the light source lamps **2C** can be individually controlled. In this case, by replacing air mass filters **10C** (spectral adjusting filter) with those having different light transmittance, the amount of light entering respective light guiding members **14** can also be adjusted. In the case of such adjustment with regard to the pseudo-sunlight irradiation apparatus **1** according to Embodiment 1, lamps of the xenon light source **2** and halogen light source **7** can be replaced and the electric current can be adjusted, so that the amount of light output from the light source lamps can be individually controlled. Further, the air mass filter **5** and air mass filter **10** can be replaced with air mass filters with different light transmittance, so that the amount of light entering respective light guiding members **14** can also be adjusted.

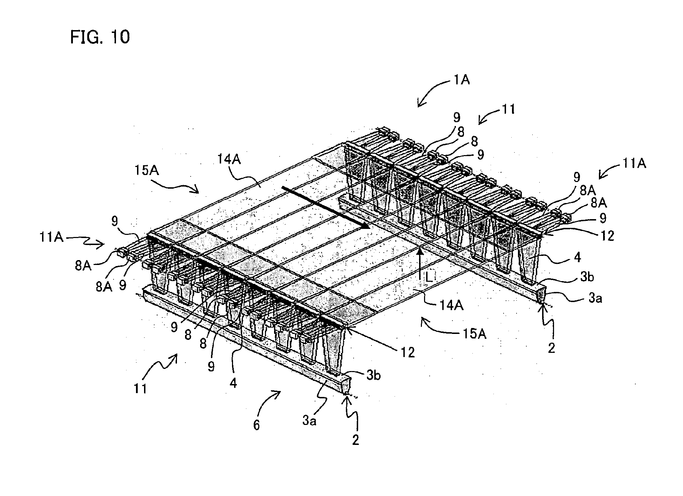

Further, as illustrated in Figure **9(b)****,** the light guiding member **14** may be in one irradiation course without being divided, similar to a light source lamp **2D,** and the transmittance of each filter may be individually controlled by replacing only the air mass filter **10D** (spectral adjusting filter). Alternatively, the amount of light entering the light guiding member **14** can be suppressed and adjusted by adding a light transmission filter, other than an air mass filter **10D** (spectral adjusting filter), as a correction filter for controlling transmittance. This is not applicable to the pseudo-sunlight irradiation apparatus **1** according to Embodiment 1; on the contrary, the xenon light source **2** and reflector **3a,** or the halogen light source **7** and reflector **8** of the pseudo-sunlight irradiation apparatus **1** according to Embodiment 1 can be formed in one irradiation course as illustrated in Figure **10(b).**

### (Embodiment 2)

In Embodiment 1, the case has been described where the third light irradiation apparatuses **15** are placed on the left and right sides, and light guiding members **14** are in contact with each other at their end surfaces. In Embodiment 2, a case will be described where light guiding members **14** on the left and right sides are integrated with each other so that the third light irradiation apparatuses **15** on the left and right sides in Embodiment 1 are also integrated with each other.

Specifically, in Embodiment 1, the case has been described where as the pseudo-sunlight irradiation apparatus **1,** a first light irradiation apparatus **6,** a second light irradiation apparatus **11** and a third light irradiation apparatus **15** are unitized as a set; the unitized sets are placed facing each other in the left and right direction; and a plurality of two such units, in which the other end surfaces of the respective third light guiding members **14** and **14** of the third light irradiation apparatus **15** touch each other, are placed in an array in the forward and backward direction in accordance with the size of the irradiation subject **13.** In Embodiment 2, a case will be described where, as a pseudo-sunlight irradiation apparatus **1A** to be described below, a fourth light guiding member **14A** is provided in between a left side set with a first light irradiation apparatus **6,** a second light irradiation apparatus **11,** and a light mixing section **12** arranged therein and a right side set with a first light irradiation apparatus **6,** a second light irradiation apparatus **11,** and a light mixing section **12** arranged therein for taking mixed light from the mixing section **12** on the left side into one end surface and allowing the light to propagate through the inside thereof, and for taking mixed light from the mixing section **12** on the right side into the other end surface and allowing the light to propagate through the inside thereof, to emit light with high directivity uniformly as area light from a flat surface onto an irradiation subject **13.** They are unitized as a set, and a plurality of the unitized sets are placed in an array in the forward and backward direction in accordance with the size of the irradiation subject.

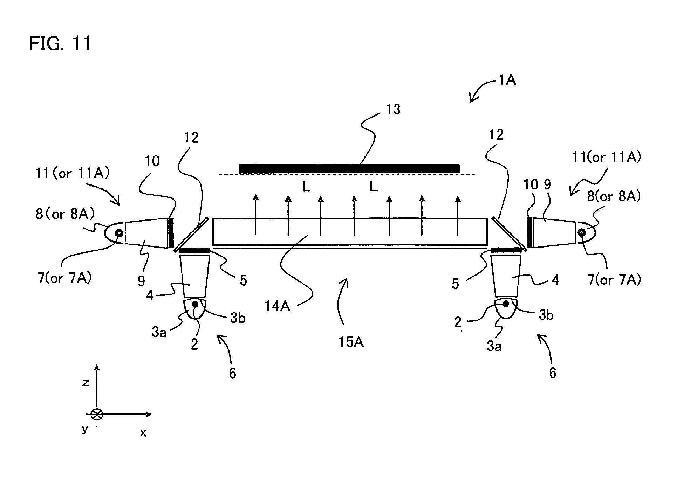

Figure **10** is a perspective view schematically illustrating a structural example of an important part of a pseudo-sunlight irradiation apparatus according to Embodiment 2 of the present invention. Figure **11** is a longitudinal cross sectional view schematically illustrating a structural example of an important part of a pseudo-sunlight irradiation apparatus in Figure **10****.** Note that in Figures **10** and **11****,** the same reference numerals are provided for those structural members which have the same functional effects as those in Figures **1** and **2****.**

In Figures **10** and **11****,** while a pseudo-sunlight irradiation apparatus **1A** according to Embodiment 2 comprises the same configuration as the first light irradiation apparatus **6** and the second light irradiation apparatus **11** (or **11A**) in Embodiment 1, the pseudo-sunlight irradiation apparatus **1A** is different in that a first light irradiation apparatus **6** and a second light irradiation apparatus **11** (or **11A**) on the left side and a first light irradiation apparatus **6** and a second light irradiation apparatus **11** (or **11A**) on the right side are used as a unit. Further, instead of the configuration of the third light irradiation apparatus **15** in Embodiment 1, a fourth light irradiation apparatus **15A** will be used. In summary, the pseudo-sunlight irradiation apparatus **1A** according to Embodiment 2 is different from the case of the pseudo-sunlight irradiation apparatus **1** according to Embodiment 1, in that the apparatus uses the light guiding member **14A** in which the light guiding members **14** according to Embodiment 1 on the left and right sides are integrated with each other. Thus, the fourth light irradiation apparatus **15A,** in which two light irradiation apparatuses 15 on the left and right sides are integrated with each other, is used.

The fourth light irradiation apparatus **15A** comprises: a mixing section **12** on the left side, such as a wavelength selecting mirror (or a wavelength mixing mirror) as a reflection and transmission means for reflecting xenon output light of a shorter wavelength from an air mass filter **5** to adjust a spectrum of a first light irradiation apparatus **6** on the left side and for transmitting halogen output light of a longer wavelength from an air mass filter **10** to adjust a spectrum of a second light irradiation apparatus **11** on the left side, to mix the light and obtain pseudo-sunlight similar to sunlight; a mixing section **12** on the right side, such as a wavelength selecting mirror (or a wavelength mixing mirror) as a reflection and transmission means for reflecting xenon output light of a shorter wavelength from an air mass filter **5** to adjust a spectrum of a first light irradiation apparatus **6** on the right side and for transmitting halogen output light of a longer wavelength from an air mass filter **10** to adjust a spectrum of a second light irradiation apparatus **11** on the right side, to mix the light and obtain pseudo-sunlight similar to sunlight; and a light guiding member **14A** for taking the pseudo-sunlight, which is diffusion light from the mixing section **12** on the left side, into one end surface and allowing the light to propagate through the inside thereof, and taking the pseudo-sunlight, which is diffusion light from the mixing section **12** on the right side, into the other end surface and allowing the light to propagate through the inside thereof, to emit light **L** with high directivity uniformly as area irradiation onto an irradiation subject **13,** such as, for example, a solar panel. In this case, in the fourth light irradiation apparatus **15A,** the light guiding member **14A** is formed in an integrated form.

The light guiding member **14A** can use light more efficiently than if the light guiding member **14A** was divided into two light guiding members **14** and **14** as in Embodiment 1 since there is no reflection of light at the end surfaces therebetween. Further, in the method for arraying the light guiding members as in Embodiment 1, when light is reflected off the other end surface, the use of a reflection mirror will have an unfavorable influence on the spectrum. On the other hand, the light guiding member **14A** does not need to be divided into two light guiding members **14** on the left and right as in Embodiment 1. Thus, there is no light adjusting necessary at the middle end surfaces, and the spectral characteristics can be maintained favorably. When the light guiding member **14A** is made of glass material, the manufacturing of the light guiding member **14A** will be more difficult as the area becomes larger. However, such glass material can be optimally applied to a light guiding member **14A** with a relatively small area.

Next, unitization with a freely changeable irradiation area will be described.

As illustrated in Figure **10****,** the pseudo-sunlight irradiation apparatus **1A** according to Embodiment 2 comprises first light irradiation apparatuses **6** on the left and right sides, second light irradiation apparatuses **11** on the left and right sides and a fourth light irradiation apparatus **15A,** all of which are configured as a unit. In Embodiment 2, eight sets of such unit are provided in an array in the forward and backward direction without a space in between. The first light irradiation apparatuses **6** on the left and right sides, the second light irradiation apparatuses **11** on the left and right sides and the fourth light irradiation apparatus **15A** can be unitized as a unit, which allows the unit to be accurately manufactured. The first light irradiation apparatuses **6** on the left and right sides, the second light irradiation apparatuses **11** on the left and right sides and the fourth light irradiation apparatus **15A** are combined in the forward and backward direction as a unit, so that the size of an irradiation surface of pseudo-sunlight corresponding to a desired size of a solar panel can be obtained. Thus, a unit of the first light irradiation apparatuses **6** on the left and right sides, the second light irradiation apparatuses **11** on the left and right sides and the fourth light irradiation apparatus **15A** is not limited to the case of such eight units in the forward and backward direction. Thereby, the unitization with a freely changeable irradiation area can be achieved. In this case as well, since the xenon light source **2,** reflector **3a,** and aperture plate **3b** are all in one irradiation course, they are used together. The xenon light source **2,** reflector **3a,** and aperture plate **3b** may also be provided for each tapered light guiding member **4.**

As described above, the unitization of the first light irradiation apparatus **6** on the left and right sides, second light irradiation apparatus **11** on the left and right sides and fourth light irradiation apparatus **15A as** a unit makes it possible to suppress variation in irradiation intensity on an irradiation area of a unit and accurately obtain desired irradiation intensity (light amount). Even when a unitized unit of an irradiation area is combined with another to form a larger irradiation area, variation in irradiation intensity can be suppressed with such a large irradiation area as a whole to obtain desired uniform irradiation intensity (light amount). In summary, although it may be difficult to make the irradiation intensity of a large irradiation area uniform with accuracy, the irradiation intensity (light amount) of a large irradiation area can be accurately made uniform by dividing a large irradiation area into a plurality of areas, making the irradiation intensity of each of the small irradiation areas uniform with accuracy, and merely combining the areas together.

Thus, the first light irradiation apparatus **6** on the left and right sides, second light irradiation apparatus **11** on the left and right sides and fourth light irradiation apparatus **15A** are formed as a unit and the unit is manufactured such that irradiation intensity (light amount) of the unit is highly accurate. When the unit is assembled in accordance with the size of a solar panel, it will not be necessary to adjust the light amount for irradiation intensity (light amount), as has been done conventionally, taking a lot of time. Specifically, it has conventionally been necessary to measure which parts of a whole large irradiation area have low irradiation intensity, using an irradiation intensity inspection apparatus with reference irradiation detection cells provided at important points in accordance with the size of a solar panel, and to adjust the portions with low irradiation intensity in order to increase the irradiation intensity. With the present invention, such work will not be necessary.

Next, the adjustment of irradiation intensity (adjustment of a light amount) of a whole irradiation area will be further described.

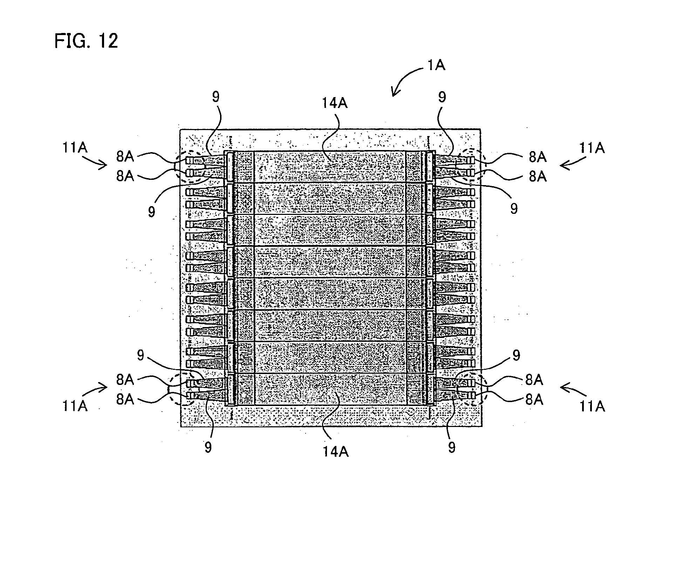

Figure **12** is a plane view of a pseudo-sunlight irradiation apparatus **1A** in Figure **10****.**

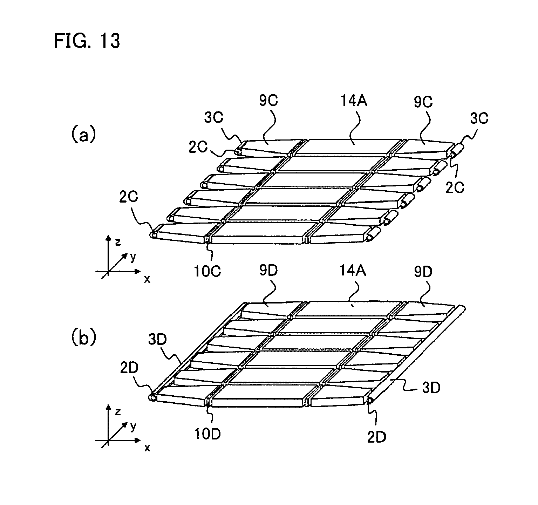

The first light irradiation apparatuses **6** on the left and right sides, the second light irradiation apparatuses **11** on the left and right sides and the fourth light irradiation apparatus **15A** constitute a unit, and eight sets of such a unit are provided in the forward and backward direction. Since the amount of light output from reflectors on both ends (the closest one and the farthest one) in the forward and backward direction shows a tendency to be less, as illustrated in the plane view of Figure **13****,** similar to the case of the plane view in Figure **8****,** the amount of light output from reflectors on both ends is increased herein more than that at the other parts closer to the center portion so that the amount of irradiation light can be uniform. At both ends in the forward and backward direction, a halogen light source **7A** can be used, which is a little larger than the halogen light source **7.**

In the pseudo-sunlight irradiation apparatus **1A** according to Embodiment 2, the second light irradiation apparatuses **11** on the left and right sides and the fourth light irradiation apparatus **15A** are unitized, and eight such units are provided in an array in the forward and backward direction. At least the unit can comprise a replaceable lamp with a different output light amount or a replaceable air mass filter **5** (spectral adjusting filter) with a different light transmittance, so that irradiation intensity (light amount) of light entering the light guiding plate **14A** can be individually adjusted. By providing an attachment section for either the halogen light source **7** previously mentioned or the halogen light source **7A,** which has a higher amount of output light, light sources with different amounts of output light may be replaced.

According to Embodiments 1 and 2 with the structure described above, with the pattern (scatterer) of light guiding member **14** or **14A,** where pseudo-sunlight allowed to enter is obtained by adjusting spectrum of xenon light and halogen light and mixing the xenon light and the halogen light, light having uniform illuminance can irradiate from the light guiding member **14** or **14A.** Since an irradiation surface irradiating a solar panel as the irradiation subject **13** is assumed to be divided into a plurality of areas, and the light guiding members **14** or **14A** are arranged to correspond to respective divided small irradiation areas, by adjusting only the amount of irradiation light of the small irradiation surface for each light guiding member **14** or **14A,** unification of illuminance of the whole surface of the plurality of small irradiation surfaces can be realized easily and reliably. If the solar panel has a large area, then by arranging a plurality of optical systems to match the size of the solar panel, even if the area is large, irradiation light with uniform illuminance can be produced easily, reliably, and quickly. Further, even if there is irregularity in illuminance for a single lamp due to individual difference of a lamp after lamp replacement, uniform irradiation light can be obtained by simply adjusting the amount of light for each unitized optical system. Thus, readjustment is unnecessary.

Although not specifically described in Embodiments 1 and 2, a scatterer (pattern) is printed on the light guiding member **14** and **14A.** Light entering the light guiding member **14** and **14A** is scattered by the scatterer to emit light uniformly as area irradiation onto a solar panel as the irradiation subject **13.** The scatterer (pattern) of the light guiding member **14** and **14A** is printed having a pattern such that the illuminance becomes uniform on the whole irradiation surface. When illuminance irregularity arises on the left and right on the irradiation surface placed on a solar panel, by adjusting the amount of light output for each unitized light source optical system on the left and right (one unit), illuminance irregularity can be easily and reliably reduced. If the light guiding members **14** and **14** of the light source optical system on the left and right are integrated as the light guiding member **14A,** when illuminance irregularity arises on the irradiation surface, irradiation light from the light guiding member **14A** of the integrated light source optical system is irradiated on the whole irradiation surface. Thus, partial adjustment of illuminance on the irradiation surface using only adjustment of the amount of light is more difficult in comparison to the light guiding members **14** and **14** of the light source optical system on the left and right. In addition, when the light guiding members **14** and **14** on the left and right are integrated as the light guiding member **14A,** it becomes necessary for a printed pattern of a scatterer to produce uniform light in an expansive area and further uniform light is irradiated even when light enters from both edges of the light guiding member. Thus, it is necessary that integration of the light guiding members **14** and **14** on the left and right be performed for an irradiation area to the extent where production of uniform light is not impeded. Adjustment of illuminance irregularity on the irradiation surface is easier with light guiding members **14** and **14** on the left and right than with the integrated light guiding member. Further, when a solar panel is enlarged, uniform light in an expansive area is produced by simply arranging numerous optical systems of the present invention. Additionally, adjustment to make illuminance on the irradiation surface uniform becomes possible, even for an expansive area, by simply adjusting the amount of irradiation light from the light source optical system of each optical system.

Further, similarly to the case of Embodiment 1, in order to prevent stray light from entering an adjacent tapered light guiding member **4** or **9** through its side surface, a light shielding member is placed in between, for example, an opening between the xenon light source **2** and the bottom end surface side of the tapered light guiding member **4;** and an adjacent tapered light guiding member **4.** For example, as illustrated in Figure **5(a),** a light shielding member **41** surrounds the periphery (side wall) of the tapered light guiding member **4,** so that stray light **L1** and **L2** with poor directivity, escaping through the opening in between the bottom end surface of the tapered light guiding member **4** and the aperture section of the aperture plate **3b,** irradiates the light shielding member **41.** Thus, this prevents light from entering the inside the tapered light guiding member **4** through the side surface, reflecting off a wavelength selecting mirror of the light mixing section **12,** and entering a light guiding plate **14** side as stray light **L2,** as happens conventionally. Alternatively, a ring-shaped light shielding member **42** with a predetermined height of a light shielding wall is placed on the side facing an adjacent light guiding member as in Figure **5(b)** for example, on the circumference side, in a transverse cross-sectional shape, of the tapered light guiding member **4** in such a manner to cover the opening in between the bottom end surface of the tapered light guiding member **4** and a aperture plate **3b** facing a reflector **3a.** Thus, stray light **L1** and **L2** with poor directivity, escaping through the opening in between the bottom end surface of the tapered light guiding member **4** and the aperture section of the aperture plate **3b,** irradiates the inner surface of the ring-shaped light shielding member **42;** this prevents light from entering the inside the tapered light guiding member **4** entering through the side surface, reflecting off a wavelength selecting mirror of the light mixing section **12,** and entering a light guiding plate **14** side as stray light **L2.**

Although not specifically described in Embodiment 1, in the pseudo-sunlight irradiation apparatus **1,** a plurality of optical systems are provided. Each optical system comprises: at least two light sources with different ranges of emitted wavelengths; optical elements for providing different spectral distributions for respective rays of the output light from the two light sources; and light guiding bodies for propagating output light obtained through the optical elements and emitting the light as area irradiation externally. An irradiation area of an irradiation subject **13** is assumed to be divided into a plurality of areas to be constituted as a plurality of small irradiation areas. Light guiding members of the optical systems correspond to respective ones of the plurality of small irradiation areas, and a plurality of optical systems emit light onto the entire irradiation area. Thus, the objective of the present invention can be achieved as irradiation light with uniform illuminance can be readily and reliably emitted over an entire irradiation area even if an area of an irradiation subject is large or even after lamp replacement.

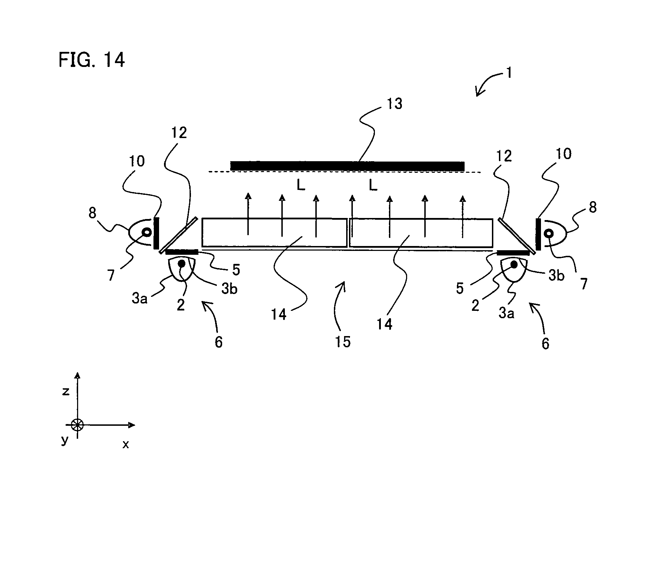

In Embodiment 1, a case has been described, as illustrated in Figure **2****,** where the optical system comprises: the first light irradiation apparatus **6** comprising a first light source (xenon lamp **2**), a first light guiding member for taking output light from the first light source into one end surface and outputting light with improved directivity from the other end surface (tapered light guiding member **4**), and a first optical filter for adjusting the spectrum of light output from the other end surface of the first light guiding member (air mass filter **5**); a second light irradiation apparatus **11** comprising a second light source (halogen lamp **7**), a second light guiding member for taking output light from the second light source into one end surface and outputting light with improved directivity from the other end surface (tapered light guiding member **9**), and a second optical filter for adjusting the spectrum of light output from the other end surface of the second light guiding member; and a third light irradiation apparatus **15** comprising a light mixing member **12** for obtaining pseudo-sunlight similar to sunlight by mixing light from the first light irradiation apparatus **6** and light from the second light irradiation apparatus **11,** and a third light guiding member for taking pseudo-sunlight from the light mixing member **12** into one end surface, propagating the light through the inside thereof, to emit light with high directivity as area irradiation onto the irradiation subject **13** uniformly from a planar surface (light guiding member **14**). The structure is not limited to this. As illustrated in Figure **14****,** the optical system may comprise: a first light irradiation apparatus **6** comprising a first light source (xenon lamp **2**), and a first optical filter functioning as the optical element for adjusting the spectrum of light output from the first light source (air mass filter **5**); a second light irradiation apparatus **11** comprising a second light source (halogen lamp **7**), and a second optical filter functioning as the optical element for adjusting the spectrum of light output from the second light source (air mass filter **10**) ; and a third light guiding member **15** comprising a light mixing member **12** for obtaining pseudo-sunlight similar to sunlight by mixing light from the first light irradiation apparatus **6** and light from the second light irradiation apparatus **11;** and a third light guiding member **14** for taking pseudo-sunlight from the light mixing member **12** into one end surface, and propagating the light through the inside thereof, to emit light with high directivity onto the irradiation subject **13** uniformly from a flat surface. In this structure, in comparison to the case in Embodiment 1, the difference is only that the first light guiding member (tapered light guiding member **4**) and the second light guiding member (tapered light guiding member **9**) are not present.

In Embodiment 1, the first light irradiation apparatus **6,** the second light irradiation apparatus **11** and the third light irradiation apparatus **15** are formed into a unit. A plurality of groups of two units, wherein the units of each of said groups are placed facing each other in the left and right direction and where the other end surfaces of the respective third light guiding members (light guiding members **14**) of the third light irradiation apparatus **15** touch each other, are placed in an array in the forward and backward direction in accordance with the size of the irradiation subject **13.** On the other hand, in Embodiment 2, in between a left-side set with the first light irradiation apparatus **6,** the second light irradiation apparatus **11** and the light mixing section **12** arranged therein and a right-side set with the first light irradiation apparatus **6,** the second light irradiation apparatus **11** and the light mixing section **12** arranged therein, the fourth light guiding member (light guiding member **14A**) is provided, for taking mixed light from the mixing section **12** on the left side into one end surface and allowing the light to propagate through the inside thereof, and for taking mixed light from the mixing section **12** on the right side into the other end surface and allowing the light to propagate through the inside thereof, to emit light with high directivity uniformly as area irradiation from a flat surface onto an irradiation subject **13.** This is to be a unit, and a plurality of units are placed in an array in the forward and backward direction in accordance with the size of the irradiation subject **13.**

Although not particularly described in Embodiment 2, similarly to the case of Embodiment 1, when the balance of the amount of output light from the light guiding member **14A** for area irradiation is adjusted, the amount of light is changed independently of the conditions of an optical system in the middle for allowing the light to enter the light guiding members **14A** through both sides. Specifically, even after the spectral distribution of pseudo-sunlight is fixed, the amount of output light from the light guiding member **14A** can be adjusted without changing the spectral distribution of pseudo-sunlight.

Although not specifically described in Embodiment 2, similarly to the case in Embodiment 1, as illustrated in Figure **13(a)****,** a light guiding member **14A** and a light source lamps **2C** are paired one-to-one, and some lamps are exchanged or the electric current is adjusted, so that the amount of light output from the light source lamps **2C** can be individually controlled. In this case, as a matter of course, by replacing air mass filters 10C (spectral adjusting filter) with those having different light transmittance, the amount of light entering the light guiding member **14A** can also be adjusted. In the case of such adjustment with regard to the pseudo-sunlight irradiation apparatus **1A** according to Embodiment 2, lamps of the xenon light source **2** and halogen light source **7** can be replaced and the electric current can be adjusted, so that the amount of light output from the light source lamps can be individually controlled. Further, the air mass filter **5 and** air mass filter **10** can be replaced with air mass filters with different light transmittance, so that the amount of light entering the light guiding member **14A** can also be adjusted.

Further, as illustrated in Figure **13(b)****,** the light guiding member **14A** may be in one irradiation course without being divided, similar to a light source lamp **2D,** and the transmittance of each filter may be individually controlled by replacing only the air mass filter **10D** (spectral adjusting filter). Alternatively, the light amount entering the light guiding member **14A** can be suppressed and adjusted by adding a light transmission filter, other than an air mass filter **10D** (spectral adjusting filter), as a correction filter for controlling transmittance. This is not applicable to the pseudo-sunlight irradiation apparatus **1A** according to Embodiment 2; on the contrary, the xenon light source **2** and reflector **3a,** or the halogen light source **7** and reflector **8** of the pseudo-sunlight irradiation apparatus **1A** according to Embodiment 2 can be formed in one irradiation course as illustrated in Figure **13(b)****.**

In Embodiments 1 and 2, the pseudo-sunlight irradiation apparatus **1** or **1A** has been described, in which: a plurality of sets of a first light irradiation apparatus **6,** a second light irradiation apparatus **11** and a third light irradiation apparatus **15** or **15A** are provided; first tapered light guiding members **4** are adjacently arrayed with one another and second tapered light guiding members **9** are adjacently arrayed with one another; and a light shielding member is placed in between the adjacent tapered light guiding members **4** and/or the adjacent tapered light guiding members **9.** However, without being limiting, such a pseudo-sunlight irradiation apparatus may be that comprising an area-irradiating light guiding member **14** or **14A** for taking into one end surface pseudo-sunlight from either of the first light irradiation apparatus **6** or the second light irradiation apparatus **11,** allowing the light to propagate through the inside thereof, and emitting the light with high directivity uniformly as area irradiation onto an irradiation subject **13.** In this case, the light guiding member of either of the first light irradiation apparatus **6** or the second light irradiation apparatus **11** includes a light shielding member placed thereon for shielding light, so that stray light will not enter the circumferential wall other than the one end surface and the other end surface of the tapered light guiding member.

Although not particularly described in Embodiments 1 or 2, the air mass filter **5,** functioning as a first optical filter, is constituted of a plurality of filters, for adjusting the spectrum of the xenon light source **2,** and one of the filters is a reflection mirror that reflects only near infrared light, and further, a light shielding member **41** or **42** is placed to cover surfaces, other than the surfaces which allow light to enter or exit, of the tapered light guiding member **4** that increases the directivity of the output light from the xenon light source **2.** Thereby, stray light due to a near infrared light reflection mirror can be prevented.

As described above, the present invention is exemplified by the use of its preferred Embodiments 1 and 2. However, the present invention should not be interpreted solely based on Embodiments 1 and 2 described above. It is understood that the scope of the present invention should be interpreted solely based on the claims. It is also understood that those skilled in the art can implement an equivalent scope of technology, based on the description of the present invention and common knowledge from the description of the detailed preferred Embodiments 1 and 2 of the present invention. Furthermore, it is understood that any patent, any patent application and any references cited in the present specification should be incorporated by reference in the present specification in the same manner as the contents are specifically described therein.

### INDUSTRIAL APPLICABILITY

The present invention can be applied in the field of a pseudo-sunlight irradiation apparatus for emitting pseudo-sunlight with high directivity onto an irradiation subject, and a solar panel inspection apparatus for measuring an output characteristic of a solar panel to determine quality, using the pseudo-sunlight irradiation apparatus. According to the present invention, irradiation light with uniform illuminance can be readily and reliably emitted over an entire irradiation area even if the area of an irradiation subject is large and even after lamp replacement.

## Claims

1. A pseudo-sunlight irradiation apparatus comprising a plurality of optical systems provided therein, each optical system comprising:
at least two light sources with different ranges of emitted wavelengths;
optical elements for providing different spectral distributions for respective rays of output light from the two light sources; and
light guiding bodies for propagating the output light obtained through the optical elements and emitting the light as area irradiation onto an external irradiation subject,
wherein: an irradiation area of the irradiation subject is assumed to be divided into a plurality of small irradiation areas; light guiding members of each of the optical systems correspond to respective ones of the plurality of small irradiation areas; and the plurality of optical systems emit the light onto the entire irradiation area.

2. A pseudo-sunlight irradiation apparatus according to claim 1, wherein each of the optical systems comprises:
a first light irradiation apparatus having a first light source, and a first optical filter as the optical element for adjusting a spectrum of light emitted from the first light source;
a second light irradiation apparatus having a second light source, and a second optical filter as the optical element for adjusting a spectrum of light emitted from the second light source; and
a third light irradiation apparatus having a light mixing member for mixing the light from the first light irradiation apparatus and the light from the second light irradiation apparatus to obtain pseudo-sunlight similar to sunlight, and a third light guiding member for taking the pseudo-sunlight from the light mixing member into the third light guiding member from one end surface and propagating the light through the inside thereof to emit light with high directivity as area irradiation onto an irradiation subject uniformly from a planar surface of the third light guiding member.

3. A pseudo-sunlight irradiation apparatus according to claim 1, wherein each of the optical systems comprises:
a first light irradiation apparatus having a first light source, a first light guiding member for taking output light from the first light source into one end surface of the first light guiding member and emitting light with increased directivity from another end surface thereof, and a first optical filter for adjusting a spectrum of the light output from the other end surface of the first light guiding member;
a second light irradiation apparatus having a second light source, a second light guiding member for taking output light from the second light source into one end surface of the second light guiding member and emitting light with increased directivity from another end surface thereof, and a second optical filter for adjusting a spectrum of the light output from the other end surface of the second light guiding member; and
a third light irradiation apparatus having a light mixing member for mixing the light from the first light irradiation apparatus and the light from the second light irradiation apparatus to obtain pseudo-sunlight similar to sunlight, and a third light guiding member for taking the pseudo-sunlight from the light mixing member into the third light guiding member from one end surface and propagating the light through the inside thereof to emit light with high directivity as area irradiation onto an irradiation subject uniformly from a planar surface of the third light guiding member.

4. A pseudo-sunlight irradiation apparatus according to claim 2 or 3, wherein the optical system having the first light irradiation apparatus, the second light irradiation apparatus and the third light irradiation apparatus is defined as a unit, , and a plurality of groups of two units, wherein the units of each of said groups are placed on the left and right facing each other and where the other end surfaces of the third light guiding members of the third light irradiation apparatuses touch each other, are placed in an array in a forward and backward direction in accordance with the size of the irradiation subject.

5. A pseudo-sunlight irradiation apparatus according to claim 2 or 3,
wherein instead of the third light irradiation apparatus, a fourth light guiding member is provided in between a left side set in which the first light irradiation apparatus, the second light irradiation apparatus and the light mixing section are placed, and a right side set in which the first light irradiation apparatus, the second light irradiation apparatus and the light mixing section are placed, the fourth light guiding member being for taking mixed light from the light mixing section on the left side into one end surface of the fourth light guiding member and propagating the light through the inside thereof, as well as for taking mixed light from the light mixing section on the right side into another end surface of the fourth light guiding member and propagating the light through the inside thereof, to emit light with high directivity as area irradiation onto an irradiation subject uniformly from a planar surface of the fourth light guiding member, and
wherein the left side set, the right side set and the fourth light guiding member are defined as a unit, and a plurality of the units are placed in an array in a forward and backward direction in accordance with the size of an irradiation subject.

6. A solar panel inspection apparatus for measuring an output characteristic of a solar panel to determine quality, using the pseudo-sunlight irradiation apparatus according to any of claims 1 to 3.
